# NEW EUROPEAN PATENT SPECIFICATION

(11) **EP 2 152 091 B2**
(45) Date of publication and mention of the opposition decision: **19.09.2018**
(45) Mention of the grant of the patent: 18.02.2015
(21) Application number: 08749470.4
(22) Date of filing: 15.05.2008
(51) Int. Cl.: A23G 1/04, A23G 1/32, A23G 1/30, A23G 1/00, A23G 1/36, A23G 1/46

(54) **PROCESS**
VERFAHREN
PROCÉDÉ

(30) Priority: 21.05.2007 GB 0709689
(43) Date of publication of application: 17.02.2010
(73) Proprietor: Barry Callebaut AG, Zurich (CH)
(72) Inventor: DE BROUWER, Marijke, B-9280 Lebbeke-Wieze (BE); DERYCKE, Veerle, B-9280 Lebbeke-Wieze (BE)
(74) Representative: Potter Clarkson LLP
(86) International application number: PCT/EP2008/003944
(87) International publication number: WO 2008/141770

(56) References cited:
- WO-A-96/05735
- WO-A-96/19923
- WO-A-02/087351
- WO-A2-96/17523
- US-A- 5 051 265
- US-A- 5 709 903

## Description

This invention relates to a process for preparing a reduced fat chocolate.

Chocolate and chocolate-like products are generally very popular amongst consumers on account of their good taste and texture. Chocolate contains both fat and sugar and these contribute to the good taste of the product. Omitting either the fat or the sugar can adversely affect the product to the extent that it is no longer acceptable to the consumer. However, there is a desire amongst some consumers to reduce their total intake of fat and/or sugar and so there is a need for chocolate products that have a lower fat and/or sugar content.

Reducing the fat and/or sugar content of chocolate presents particular technical problems. In order to obtain a good fineness of the solid particles after refining, a consistent paste has to be formed after the ingredients are mixed. Fat is needed in a sufficient level to form a paste with the right consistency and sugar replacers may also have an effect on the consistency of the mixture.

Processes for manufacturing reduced fat and reduced calorie chocolate have been proposed. For example, US 5,882,709 discloses a process for producing a chocolate composition which involves removing some of the fat, for example by pressing some of the fat out of the chocolate using a press.

US 5,989,619 discloses a chocolate composition having a reduced fat content in which a low fat chocolate composition (typically about 1.5% fat) is milled and the milled product is blended with a full fat (30% fat) chocolate.

US 6,143,350 describes a process for the preparation of reduced fat milk chocolate which involves preparing a powdered premix of the non-fat ingredients and subsequently adding a fat.

WO 96/05735 discloses chocolate products with sucrose fatty acid polyester fat substitutes.

WO 96/19923 describes a process for the manufacture of a chocolate composition having a total fat content of 18-24.9% by weight in which particles of solid chocolate-making ingredients are mixed with a fat. In order to reduce the viscosity of the mixture, the particle size is generally maintained in the range of 2 microns to 60 microns.

WO 99/45790 relates to reduced fat chocolates that employ specific combinations of emulsifying agents in order to compensate for the reduction in fat.

US 2,348,837 and GB 578,078 describe a process for producing cocoa powder by emulsifying and fractionating cocoa mass. There is no disclosure of reduced fat chocolate and the only mention of a process for producing chocolate is by a conventional method from a first powder containing cocoa solids, sugar and the like and a second powder very rich in fat.

Processes for producing reduced fat chocolate and chocolate-like material have not yet achieved any degree of commercial success. The problems that a process for producing a reduced fat chocolate must overcome are that, whilst the fat and/or sugar content is reduced, the taste of the product must remain good and the product must remain workable i.e., the viscosity must be low enough to allow the product to be tempered and to allow it to be used in applications involving, for example, moulding, enrobing, dipping, bottoming and panning.

Surprisingly, it has been found that it is possible to produce a reduced fat chocolate or chocolate-like material with a good taste and texture. The chocolate can be made using conventional chocolate-making steps and apparatus and the product does not suffer from the problems of difficulty in workability.

According to the invention in a first aspect, there is provided a process for preparing a reduced fat chocolate comprising the steps:
(a) providing a powder comprising at least 15% by weight fat and at least 40% by weight of two or more different particulate ingredients, wherein the fat at least partly coats at least a proportion of the two or more different ingredients and the fat in the powder is in the most stable (beta) polymorphic form;
(b) mixing the powder with one or more further ingredients to form a mixture comprising from 20 to 90% by weight of the powder;
(c) refining the mixture; and
(d) conching the refined mixture.

The invention relates to chocolate. The term "chocolate" as used herein refers to chocolate and to chocolate-like materials in which at least a part of the cocoa butter in chocolate is replaced by another fat, such as butterfat or a vegetable fat such as a cocoa butter equivalent (CBE). Chocolate and chocolate-like materials will typically have been produced in a chocolate making process which comprises a step of conching.

The term "conching", as used herein, will be understood by those skilled in the art and refers to a flavour-developing step which involves the intimate mixing or kneading of the chocolate ingredients, typically at elevated temperatures.

The present invention is based on the unexpected finding that it is possible to produce a good-tasting chocolate, which is workable, by using a powder. Without wishing to be bound by theory, it is believed that by making a powder in which the fat in the powder at least partly coats other ingredients in the powder and using this as the starting material in a subsequent chocolate-making process, it is possible to attain good workability and taste, whilst reducing the level of fat in the final chocolate product.

The powder that is used in the invention comprises at least 15% by weight fat and at least 40% by weight of two or more different particulate ingredients. In the powder, the fat at least partly coats at least a proportion of the two or more ingredients. Preferably, the fat completely coats (i.e., encapsulates) the particulate ingredients. The powder comprises particles of two or more different ingredients.

The fat content of the powder is at least 15% by weight of the powder, preferably at least 18% by weight of the powder, more preferably at least 20% by weight of the powder, even more preferably at least 22% by weight of the powder, such as at least 24% by weight of the powder. A preferred range for the amount of fat in the powder is from 24 to 30% by weight, such as from 24 to 28% by weight. The fat that is present in the powder is preferably derived from cocoa and, more preferably, is derived from cocoa liquor which is used in the process to make the powder. It will be appreciated that the fat may be a mixture of different fats and that the term "fat" refers to the fats that are typically included in chocolate products. The fat in the powder is in the most stable (beta) polymorphic form.

The powder also comprises two or more different particulate ingredients. The amount of the two or more different particulate ingredients is at least 40% by weight of the powder, more preferably at least 45% by weight of the powder, even more preferably at least 50% by weight of the powder, such as at least 55% or at least 60% by weight of the powder. A preferred range for the amount of particulate material is from 60-85% by weight, more preferably from 70-80% by weight of the powder. The particulate material that is used in the powder is preferably selected from sugar, cocoa solids, milk powder (such as skimmed milk powder), dietary fibre, sugar replacers, emulsifiers and mixtures thereof. The particulate material is typically a solid at 25 °C, more preferably at 50 °C. Particularly preferred are cocoa solids, such as are present in cocoa liquor, sugar and milk powder and the particulate material may consist of any two or all three of these components.

Sugar, may, for example, be glucose, fructose, lactose, or sucrose, or mixtures thereof, and is more preferably sucrose. Sugar replacers include, for example, mannitol, isomaltitol, xylitol, isomalt, lactitol, hydrogenated starch hydrolysates (HSH, including maltitol syrups), high fructose corn syrup and mixtures thereof. In one embodiment, the compositions are free of sugar replacers but comprise sugar, more preferably sucrose.

Suitable emulsifiers include lecithin derived from soya bean, safflower, corn; fractionated lecithins enriched with either phosphatidyl choline, phosphatidyl ethanolamine, phosphatidyl inositol; emulsifiers derived from oats, mono- and diglycerides and their tartaric esters, monosodium phosphate derivatives of mono- and diglycerides of edible fats and oils, sorbitan monostearate, sorbitan tristearate, sucrose esters, polyoxyethylene sorbitan monostearate, hydroxylated lecithin, synthetic phospholipids such as ammonium phosphatides, lactylated fatty acid esters of glycerol and propylene glycol, polyglycerol esters of fatty acids, propylene glycol mono- and diesters of fats and fatty acids. It is preferred to use at least one of fractionated lecithin and polyglycerol polyricinoleate (PGPR) as the emulsifier. Preferably, a part of the emulsifier is added before and/or during step (b) of the process and a part of the emulsifier is added before and/or during step (d).

Dietary fibres include, for example, oligofructose, dextrin (such as maltodextrin, branched maltodextrin and mixtures thereof), polydextrose and mixtures thereof. Preferred are inulin and related inulin-based polysaccharides.

The term powder is not intended to denote any particular physical shape and refers to relatively fine particles. The powder that is used in the invention is preferably free-flowing.

The powder that is used in the process of the present invention may be prepared by a process comprising:
(i) mixing two or more different particulate chocolate ingredients with a fat to form a mixture;
(ii) converting the mixture to a powder comprising at least 15% by weight fat and at least 40% by weight of said two or more different ingredients, wherein the fat at least partly coats the two or more different ingredients.

Preferably, (ii) is carried out by refining the mixture. The term "refining", as used herein in relation to all aspects of the invention, will be well-known to those skilled in the art and refers to a step of particle size reduction. The term "refining" may be synonymous with milling. The refining step may be carried out using a ball mill or roll refiner, preferably a roll refiner, more preferably a 5 roll refiner.

Powders that are suitable for use in the invention are also available commercially, for example from Barry Callebaut Belgium B.V. as BC Chocolate Powder Code L811P.

In step (b) of the process of the invention, the powder is mixed with one or more further ingredients to form a mixture comprising from 20-90% by weight of the powder. More preferably, the mixture comprises from 25-80% by weight of the powder, more preferably from 25-50% by weight, even more preferably from 25-35% by weight. The remainder of the mixture typically consists of the one or more further ingredients. The further ingredients for step (b) of the process will be other ingredients that are required to make the chocolate product, such as ingredients that are not already present in the powder or are present in the powder in an insufficient amount. Suitable further ingredients are selected from sugar, cocoa solids, milk solids, dietary fibre, sugar replacers, emulsifiers, cocoa butter, butter fat, flavours and/or colours. Preferred examples of these components are given above.

The amounts of the ingredients preferably added in step (b), based on the weight of the mixture formed in step (b) are typically:
- from 10 to 30%, more preferably from 15 to 25%, by weight of milk powder (e.g., skimmed milk powder); and/or
- from 0.01 to 5%, more preferably from 0.1 to 2%, by weight emulsifier; and /or
- from 1 to 15%, more preferably from 2 to 10%, by weight butter oil; and/or
- from 1 to 20%, more preferably from 5 to 15%, by weight cocoa butter; and/or
- from 15 to 50%, more preferably from 25 to 45%, by weight sugar (e.g., sucrose).

Step (b) of the process is typically carried out in a mixer at a temperature of from 25°C to 55°C, more preferably from 30°C to 45°C.

After the mixture has been formed, it is subjected to refining in step (c) of the process. Suitable apparatus for refining the mixture is well known to those skilled in the art and includes, for example, a 5-roll refiner.

In step (d) of the process, the refined mixture is subjected to a conching step. Preferably the conching comprises dry conching and, typically, is carried out for from 2 to 20 hours, such as from 3 to 7 hours, even more preferably from 4 to 6 hours. The temperature of the conching step is normally in the region of from 60°C to 120°C, such as from 70°C to 98°C for milk chocolate and 90°C to 120°C for dark chocolate. Step (d) preferably further comprises a step of liquid conching which is typically carried out for a period of from 30 minutes to 2 hours. Optionally, one or more emulsifiers and/or one or more flavours are added before and/or during liquid conching. The amount of emulsifier is typically less than 2% by weight based on the final chocolate product.

The chocolate may comprise one or more food additives, such as biscuit, nuts (whole or pieces), crispies, sponge, wafer or fruit, such as cherries, ginger and raisins or other dried fruit. These additives may be included at any suitable stage in the process, usually after step (d). These additives are normally embedded in the chocolate in the final product.

The chocolate of the invention may take any suitable form and may, for example, be packaged and sold as a block or a bar. Alternatively or additionally, the chocolate of the invention may optionally be filled and may be used as a coating. For example, the chocolate may be used in other confectionery and bakery applications, for example as a cake coating or filling, a biscuit coating or filling, a sponge coating or filling or a coating layer for an ice cream.

The chocolate may be used in applications comprising, for example, one or more of moulding, enrobing, dipping, bottoming and panning.

The reduced fat chocolate that is obtained in the process preferably has a fat content of less than 26% by weight, more preferably less than 25.5% by weight, even more preferably from 20% to 25% by weight. This is a lower fat content than is present in conventional full fat chocolate.

The reduced fat chocolate of the invention preferably comprises less than 26% by weight fat and less than 0.6% by weight moisture. Preferably, the water content of the chocolate is from 0.1 to 0.5% by weight. The chocolate preferably has a linear viscosity of less than 6500 mPa.s, and a Casson yield value of less than 20.0 Pa at 40°C. More preferably, the chocolate has a linear viscosity of from 2200 to 6000 mPa.s and a Casson yield value of from 3.5-18.0 Pa at 40°C. Methods for determining viscosity are well-known to those skilled in the art and include, for example, the method described in the International Office of Cocoa, Chocolate and Sugar Confectionery, IOCCC method 10.

Chocolate products according to the invention include dark chocolate, milk chocolate and white chocolate. Milk chocolate and dark chocolate are particularly preferred. A suitable dark chocolate comprises from 20% to 60% by weight of the powder of the invention, from 20% to 60% by weight of sugar (e.g., sucrose), from 5% to 20% by weight of fat and from 0.01 to 0.5% of an emulsifier (such as lecithin). A suitable milk chocolate typically comprises from 20% to 40% by weight of the powder of the invention, from 10% to 30% by weight of dairy powder (i.e., powder derived from milk, such as milk powder or skimmed milk powder), from 20% to 50% by weight of sugar, from 5% to 20% by weight of fat and from 0.01 % to 0.5% of an emulsifier (such as lecithin).

In a milk chocolate, the level of the powder of the invention is preferably between 25% and 35% by weight. Also, in a milk chocolate, the level of dairy powder is preferably from 15% to 25% by weight. Preferred fats for use in chocolate according to the invention include cocoa butter, fractions of cocoa butter, cocoa butter equivalents, and mixtures thereof. A preferred level of sugar in the chocolates of the invention is between 35% and 55% by weight. A preferred sugar is sucrose. The chocolate may further comprise butter oil, butter fat or fractions thereof or mixtures thereof. A butter based ingredient, if present, will typically be present at a level of from 3% to 7% by weight.

It will be appreciated that the various percentage amounts of the different components that are present in the compositions of the invention, including any optional components, will add up to 100%.

The listing or discussion of an apparently prior-published document in this specification should not necessarily be taken as an acknowledgement that the document is part of the state of the art or is common general knowledge.

The following non-limiting examples illustrate the invention and do not limit its scope in any way. In the examples and throughout this specification, all percentages, parts and ratios are by weight unless indicated otherwise.

### Examples

### Example 1

In this example, a reduced fat chocolate was prepared using the chocolate powder BC Chocolate Powder Code L811P, which contains 26.5% by weight fat.

The following mixture was prepared by mixing the ingredients at 30-45°C.

| | **Component** | **% by weight in the mixture** |
|---|---|---|
| 1. | Skimmed milk powder | 18.7 |
| 2. | Sorbitan tristearate | 0.5 |
| 3. | Butter oil | 5.6 |
| 4. | BC Chocolate Powder (Cde: L811P) | 30.2 |
| 5. | Cocoa butter | 9.2 |
| 6. | Sugar | 35.7 |
| 7. | Emulsifier: Fractioned Lecithin | 0.1 |

The mixture was subjected to refining using a 5-roll refiner at 45°C. After refining, the mixture was dry conched at 80-95°C for from 4½ to 6 hours, with the addition of 1.8% by weight of the final chocolate product of cocoa butter. After dry conching, liquid conching was carried out for 1 hour with the addition of a fractionated lecithin emulsifier at 0.6% by weight, flavour at 0.02% by weight and PGPR at 0.4% by weight, all percentages being based on the weight of the final chocolate product. After conching, the linear viscosity was 3870 mPa.s and the Casson yield value was 5.2 Pa.

The fat content of the finished product was 25.0% by weight and the sugar content (total mono- and disaccharides) was 59.4% by weight. The total milk solids (butter oil and milk powder) were 23.3%. The fineness of the product was measured according the method of the International Office of Cocoa, Chocolate and Sugar Confectionery (IOCCC method 116, 1990). Maximum 3% of the solid particles had a size of more than 30µm.

The prepared chocolate had the following composition:

| | **Component** | **% by weight of the final chocolate** |
|---|---|---|
| 1. | Skimmed milk powder | 18.2 |
| 2. | Sorbitan tristearate | 0.5 |
| 3. | Butter oil | 5.4 |
| 4. | BC Chocolate Powder (Cde: L811P) | 29.3 |
| 5. | Cocoa butter | 10.8 |
| 6. | Sugar | 34.7 |
| 7. | Emulsifier: Fractioned Lecithin | 0.7 |
| 8. | PGPR | 0.4 |

The conched product was then tempered. The resultant tempered chocolate was used to produce solid bars, filled bars or pralines and to enrobe biscuits. The resulting products had the characteristic appearance, taste and flavour of a product with full fat chocolate.

### Example 2

Example 1 was repeated using a different emulsifier system.

The following mixture was prepared by mixing the ingredients at 30-45°C.

| | **Component** | **% by weight in the mixture** |
|---|---|---|
| 1. | Skimmed milk powder | 18.7 |
| 2. | Butter oil | 5.6 |
| 3. | BC Chocolate Powder (Cde: L811P) | 30.1 |
| 4. | Cocoa butter | 9.4 |
| 5. | Sugar | 36.1 |
| 6. | Emulsifier: Fractioned Lecithin | 0.1 |

The mixture was subjected to refining using a 5-roll refiner at 45°C. After refining, the mixture was dry conched at 80-95°C for from 4½ to 6 hours, with the addition of 1.7% by weight of the final chocolate product of cocoa butter. After dry conching, liquid conching was carried out for 1 hour with the addition of a fractionated lecithin emulsifier at 0.4% by weight, PGPR at 0.3% by weight, ammonium phosphatides at 0.5% by weight and flavour at 0.02% by weight, all percentages being based on the weight of the final chocolate product. After conching, the linear viscosity was 3370 mPa.s and the Casson yield value was 3.7 Pa.

The fat content of the finished product was 25.0% by weight and the sugar content (total mono- and disaccharides) was 59.4% by weight. The total milk solids (butter oil and milk powder) were 23.3%. The fineness of the product was measured according the method of the International Office of Cocoa, Chocolate and Sugar Confectionery (IOCCC method 116, 1990). Maximum 3% of the solid particles had a size of more than 30µm.

The prepared chocolate had the following composition:

| | **Component** | **% by weight of the final chocolate** |
|---|---|---|
| 1. | Skimmed milk powder | 18.2 |
| 2. | Butter oil | 5.4 |
| 3. | BC Chocolate Powder (Cde: L811P) | 29.2 |
| 4. | Cocoa butter | 10.8 |
| 5. | Sugar | 35.1 |
| 6. | Ammonium phosphatides | 0.5 |
| 7. | Emulsifier: Fractioned Lecithin | 0.5 |
| 8. | PGPR | 0.3 |

The conched product was then tempered. The resultant tempered chocolate was used to produce solid bars, filled bars or pralines and to enrobe biscuits. The resulting products had the characteristic appearance, taste and flavour of a product with full fat chocolate.

## Claims

1. A process for preparing a reduced fat chocolate comprising:
(a) providing a powder comprising at least 15% by weight fat and at least 40% by weight of two or more different particulate ingredients, wherein the fat at least partly coats at least a proportion of the two or more different ingredients and the fat in the powder is in the most stable (beta) polymorphic form;
(b) mixing the powder with one or more further ingredients to form a mixture comprising from 20 to 90% by weight of the powder;
(c) refining the mixture; and
(d) conching the refined mixture.

2. Process as claimed in Claim 1, wherein the reduced fat chocolate has a fat content of less than 26% by weight.

3. Process as claimed in Claim 1 or Claim 2, wherein the fat is derived from cocoa.

4. Process as claimed in any one of the preceding claims, wherein the powder is a free flowing powder.

5. Process as claimed in any one of the preceding claims, wherein the powder comprises at least 20% by weight fat.

6. Process as claimed in any one of the preceding claims, wherein the two or more ingredients in (a) and/or the one or more ingredients in (b) are selected from sugar, cocoa solids, milk powder, dietary fibre, sugar replacers, emulsifiers and mixtures thereof.

7. Process as claimed in any one of the preceding claims, wherein the two or more particulate ingredients in (a) comprise milk powder and sucrose.

8. Process as claimed in any one of the preceding claims, wherein the one or more ingredients in (b) comprise sugar, emulsifier, cocoa butter, butter oil, skimmed milk powder and mixtures thereof.

9. Process as claimed in any one of the preceding claims, wherein cocoa butter is added before or during step (d).

10. Process as claimed in any one of the preceding claims, wherein the powder comprises from 24 to 30% by weight fat and/or from 30 to 70% by weight of sugar and/or from 40 to 60% by weight of cocoa liquor.

11. Process as claimed in any one of the preceding claims, wherein the powder comprises from 40 to 60% by weight of cocoa liquor and from 40 to 60% by weight of sugar.

12. Process as claimed in any one of the preceding claims wherein in step (a) the fat completely coats the particulate ingredients.

13. Process as claimed in any one of the preceding claims wherein in step (b) the mixture comprises from 25-80% by weight of the powder.

## Patentansprüche

1. Verfahren zum Zubereiten einer fettreduzierten Schokolade, das Folgendes umfasst:
(a) Bereitstellen eines Pulvers, das wenigstens 15 Gewichts-% Fett und wenigstens 40 Gewichts-% von zwei oder mehr unterschiedlichen teilchenförmigen Bestandteilen umfasst, wobei das Fett wenigstens teilweise wenigstens einen Anteil der zwei oder mehr unterschiedlichen Bestandteile überzieht und das Fett in dem Pulver in der stabilsten (beta-) polymorphen Form vorliegt,
(b) Mischen des Pulvers mit einem oder mehreren weiteren Bestandteilen, um ein Gemisch zu bilden, das 20 bis 90 Gewichts-% des Pulvers umfasst,
(c) Raffinieren des Gemischs,
(d) Conchieren des raffinierten Gemischs.

2. Verfahren nach Anspruch 1, wobei die fettreduzierte Schokolade einen Fettgehalt von weniger als 26 Gewichts-% aufweist.

3. Verfahren nach Anspruch 1 oder Anspruch 2, wobei das Fett von Kakao herstammt.

4. Verfahren nach einem der vorhergehenden Ansprüche, wobei das Pulver ein frei fließendes Pulver ist.

5. Verfahren nach einem der vorhergehenden Ansprüche, wobei das Pulver wenigstens 20 Gewichts-% Fett umfasst.

6. Verfahren nach einem der vorhergehenden Ansprüche, wobei die zwei oder mehr Bestandteile in (a) und/oder der eine oder die mehreren Bestandteile in (b) ausgewählt sind aus Zucker, festen Kakaobestandteilen, Milchpulver, Ballaststoffen, Zuckeraustauschstoffen, Emulgatoren und Gemischen davon.

7. Verfahren nach einem der vorhergehenden Ansprüche, wobei die zwei oder mehr teilchenförmigen Bestandteile in (a) Milchpulver und Saccharose umfassen.

8. Verfahren nach einem der vorhergehenden Ansprüche, wobei der eine oder die mehreren Bestandteile in (b) Zucker, Emulgator, Kakaobutter, Butteröl, Magermilchpulver und Gemische davon umfassen.

9. Verfahren nach einem der vorhergehenden Ansprüche, wobei die Kakaobutter vor Schritt (d) oder währenddessen zugegeben wird.

10. Verfahren nach einem der vorhergehenden Ansprüche, wobei das Pulver 24 bis 30 Gewichts-% Fett und/oder 30 bis 70 Gewichts-% Zucker und/oder 40 bis 60 Gewichts-% Kakaomasse umfasst.

11. Verfahren nach einem der vorhergehenden Ansprüche, wobei das Pulver 40 bis 60 Gewichts-% Kakaomasse und 40 bis 60 Gewichts-% Zucker umfasst.

12. Verfahren nach einem der vorhergehenden Ansprüche, wobei in Schritt (a) das Fett die teilchenförmigen Bestandteile vollständig überzieht.

13. Verfahren nach einem der vorhergehenden Ansprüche, wobei in Schritt (b) das Gemisch 25 bis 80 Gewichts-% des Pulvers umfasst.

## Revendications

1. Procédé de préparation d'un chocolat à teneur réduite en matière grasse, comprenant :
(a) l'utilisation d'une poudre contenant au moins 15 % en poids de matière grasse et au moins 40 % en poids d'au moins deux ingrédients particulaires différents, la matière grasse enrobant au moins partiellement au moins une certaine proportion des au moins deux ingrédients différents, et la matière grasse présente dans la poudre étant la forme (bêta) polymorphe la plus stable ;
(b) le mélange de la poudre avec au moins un autre ingrédient pour former un mélange contenant 20 à 90 % en poids de la poudre ;
(c) le raffinage du mélange ; et
(d) le conchage du mélange raffiné.

2. Procédé selon la revendication 1, dans lequel le chocolat à teneur réduite en matière grasse présente une teneur en matière grasse inférieure à 26 % en poids.

3. Procédé selon la revendication 1 ou la revendication 2, dans lequel la matière grasse est extraite de cacao.

4. Procédé selon l'une quelconque des revendications précédentes, dans lequel la poudre est une poudre à écoulement libre.

5. Procédé selon l'une quelconque des revendications précédentes, dans lequel la poudre contient au moins 20 % de matière grasse en poids.

6. Procédé selon l'une quelconque des revendications précédentes, dans lequel les au moins deux ingrédients en (a) et/ou l'au moins un ingrédient en (b) sont choisis parmi du sucre, des matières solides du cacao, de la poudre de lait, des fibres alimentaires, des édulcorants, des émulsifiants et leurs mélanges.

7. Procédé selon l'une quelconque des revendications précédentes, dans lequel les au moins deux ingrédients particulaires en (a) comprennent de la poudre de lait et du saccharose.

8. Procédé selon l'une quelconque des revendications précédentes, dans lequel l'au moins un ingrédient en (b) comprend du sucre, un émulsifiant, du beurre de cacao, de l'huile de beurre, de la poudre de lait écrémé et leurs mélanges.

9. Procédé selon l'une quelconque des revendications précédentes, dans lequel du beurre de cacao est ajouté avant ou pendant l'étape (d).

10. Procédé selon l'une quelconque des revendications précédentes, dans lequel la poudre contient de 24 à 30 % en poids de matière grasse et/ou de 30 à 70 % en poids de sucre et/ou de 40 à 60 % en poids de liqueur de cacao.

11. Procédé selon l'une quelconque des revendications précédentes, dans lequel la poudre contient de 40 à 60 % en poids de liqueur de cacao et de 40 à 60 % en poids de sucre.

12. Procédé selon l'une quelconque des revendications précédentes, dans lequel à l'étape (a), la matière grasse enduit complètement les ingrédients particulaires.

13. Procédé selon l'une quelconque des revendications précédentes, dans lequel à l'étape (b), le mélange contient de 25 à 80 % en poids de poudre.
